# EUROPÄISCHE PATENTANMELDUNG

(11) **EP 0 609 646 A1**
(43) Veröffentlichungstag der Anmeldung: **10.08.1994**
(21) Anmeldenummer: 93890237.6
(22) Anmeldetag: 09.12.1993
(51) Int. Cl.: B61D 25/00, B60J 1/10

(54) **Fenster in einer Aussenwand**

(30) Priorität: 29.12.1992 AT 2597/92
(71) Anmelder: WIENER METALLWERK GMBH, A-2100 Korneuburg/Leobendorf (AT)
(72) Erfinder: Gemeinböck, Gerhard, Ing., A-1220 Wien (AT); Langenreiter, Franz, A-3485 Haitzendorf (AT)
(74) Vertreter: Widtmann, Georg, Dipl.-Ing. Dr. techn.

(57) **Zusammenfassung**

Fenster in einer Öffnung (1) einer Außenwand (2) eines schienengeleiteten Fahrzeuges mit einem feststehenden Rahmen (3) aus formstabilem und zugfestem Material, z. B. Metall, faserverstärktem Kunststoff, in welchem zumindest eine, insbesondere zwei, Glasscheiben (26, 27) in Abstand zueinander über gummielastische Dichtungen (25) gelagert sind, wobei der Rahmen (3) bei der Öffnung (1) über zumindest eine gummielastische Dichtung (20) an der Innenseite der Außenwand (2) anliegt, wobei an der Innenseite der Außenwand (2), insbesondere umlaufend um die Öffnung (1), zumindest ein metallisches Formstück (7), welches einen quer, insbesondere normal, zur Außenwand (2) erstreckenden Bereich (8) aufweist, unlösbar mit der Außenwand verbunden ist, wobei das Formstück (7) quer, insbesondere normal, zur Außenwand (2) verstellbare Druckelemente (13) trägt, mit welchen der Rahmen (3) gegen die Außenwand (2) drückbar ist.

## Beschreibung

Die Erfindung bezieht sich auf ein Fenster in einer Öffnung einer Außenwand eines schienengeleiteten Fahrzeuges mit einem feststehenden Rahmen, in welchem zumindest eine Glasscheibe über gummielastische Dichtungen gelagert ist.

Die Außenwand eines schienengeleiteten Fahrzeuges besteht in der Regel aus Blechtafeln aus Stahl, Aluminium oder auch rostfreiem Stahl, wobei verschiedene Konstruktionselemente, wie Fenster, Belüftungsschlitze od. dgl. in Öffnungen der Außenwand angeordnet sind. Eine herkömmliche Art der Befestigung von Fensterrahmen besteht darin, daß ein zumindest zweiteiliger Rahmen vorgesehen ist, wobei zwischen den beiden Rahmenteilen die Außenwand über gummielastische Dichtungen lösbar eingeklemmt ist. Eine derartige Konstruktion weist den Nachteil auf, daß eine höhere Anzahl von Schrauben vorgesehen ist, die von dem äußeren Rahmen in den inneren Rahmen geführt sind, wobei gegebenenfalls entsprechende Bohrungen in der Außenwand vorgesehen sind. Damit ist eine besonders aufwendig zu montierende Konstruktion gegeben, wobei weiters das Fenster an der Außenseite der Wandung mit derselben nicht bündig abschließt, sondern erhaben ist, womit insbesondere bei Waggons für höhere Geschwindigkeiten neben einem größeren Luftwiderstand, der an sich untergeordnet ist, Stellen zur Wirbelbildung in der Luftströmung gegeben sind, welche zu akustischen Belastungen der Passagiere führen können.

Aus der AT B 343.173 wird ein Fenster mit einem mehrteiligen metallischen Rahmen bekannt. In einer Öffnung der metallischen Wand ist ein umlaufendes Profil aus gummielastischem Material angeordnet, wobei die Wand des Waggons in eine Nut desselben eingreift. Das gummielastische Profil gibt eine Öffnung in der Wand frei, die dem Außenrahmen eines Fensters entspricht. Über Schrauben wird ein metallischer Innenrahmen an dem im Profil angeordneten Außenrahmen angeschraubt, wodurch gleichzeitig eine Festklemmung am gummielastischen Profil erfolgt. Eine derartige Konstruktion ermöglicht eine von der Handhabung her einfache Montage, da der äußere Rahmen lediglich in das in die Öffnung eingelegte Gummiprofil eingeschoben werden muß, jedoch ist eine Konstruktion gegeben, die einerseits nur geringen Druckunterschieden über längere Zeit standhält und die anderseits auf Grund des gummielastischen Materials des Profiles nur eine begrenzte Beständigkeit gegenüber Witterungseinflüssen, insbesondere UV-Strahlung, aufweist. Weiters ist auch hier der Nachteil gegeben, daß die Fensterkonstruktion zwangsweise mit der Außenwand des Waggons nicht bündig abschließen kann.

Die Erfindung geht von einem Stand der Technik aus, wie er durch die AT B 343.173 gegeben ist.

Das erfindungsgemäße Fenster in einer Öffnung einer Außenwand eines schienengeleiteten Fahrzeuges mit einem feststehenden Rahmen aus formstabilem und zugfestem Material, z. B. Metall, faserverstärktem Kunststoff, in welchem zumindest eine, insbesondere zwei, Glasscheiben in Abstand zueinander über gummielastische Dichtungen gelagert sind, wobei der Rahmen bei der Öffnung über zumindest eine gummielastische Dichtung an der Innenseite der Außenwand anliegt, besteht im wesentlichen darin, daß an der Innenseite der Außenwand, insbesondere umlaufend um die Öffnung, zumindest ein metallisches Formstück, welches einen quer, insbesondere normal, zur Außenwand erstreckenden Bereich aufweist, unlösbar mit der Außenwand verbunden ist, wobei das Formstück quer, insbesondere normal, zur Außenwand verstellbare Druckelemente trägt, mit welchen der Rahmen gegen die Außenwand drückbar ist. Mit einer derartigen Konstruktion können, so erforderlich, sämtliche Elemente des Fensters im Innenraum des Waggons angeordnet werden, so daß, falls erwünscht, ein bündiges Abschließen des Fensters mit der Außenseite der Wand des Fahrzeuges einfach erreichbar ist. Durch die Zusammenwirkung der Formstücke mit dem quer zur Außenwand verstellbaren Druckelementen kann eine sehr genaue Anpressung des Rahmens an die Außenwand erreicht werden, womit eine exakte und auch dauerhafte Positionierung des Rahmens in der Öffnung der Wand des Fahrzeuges erreicht wird. Ein derartiges Fenster kann gleichzeitig eine sehr hohe Wetterbeständigkeit aufweisen.

Weisen Druckelemente Stellelemente, welche entlang, insbesondere parallel zur Außenwand, in Richtung von oben nach unten und/oder quer, insbesondere normal, zu dieser Richtung verstellbar sind und an dem Rahmen angreifen auf, so kann eine besonders einfache und exakte Montage des Rahmens erfolgen, wobei das Gewicht des Rahmens, insbesondere einschließlich der anorganischen Fensterscheiben, die Präzision der Montage nicht beeinflussen. Bei der Montage kann nun so vorgegangen werden, daß die Druckelemente den Rahmen gegen die Außenwand halten und daß anschließend mit den Stellelementen eine Justierung des Rahmens sowohl seitlich als auch nach oben erfolgt. Ist diese Justierung durchgeführt, kann anschließend diese endgültige Lage durch Erhöhung des Druckes, welches die Druckelemente auf den Rahmen ausüben, fixiert werden.

Sind die Druckelemente zumindest teilweise entlang der Formstücke um die Öffnung verschiebbar angeordnet, so ist eine besondere Flexibilität bei der Montage des Fensters gewährleistet, wobei gleichzeitig unterschiedliche Innenwandungen zum Einsatz kommen können, da die Montageelemente, wie die Druckelemente, in ihrer Lage variabel sind.

Trägt das/die Formstück(e) eine Schiene, entlang welcher die Druckelemente verschiebbar sind, so ist einerseits ein besonders exakter Kraftschluß zur Außenwand gegeben, wobei gleichzeitig eine einfache Verschiebbarkeit der Druckstücke gewährleistet ist.

Weist die Schiene eine entlang derselben verlaufende Ausnehmung mit einer insbesondere schwalbenschwanzförmigen Hinterschneidung auf, so tritt eine selbsttätige Fixierung der Druckelemente entlang der Schiene bei Druckbetätigung auf den Rahmen ein.

Weist der Rahmen eine zur Außenwand offene umlaufende Nut auf, in welcher ein Rahmendichtung, insbesondere O-Dichtung, angeordnet ist, so kann besonders einfach eine Abdichtung des Rahmens gegenüber der Außenwand erreicht werden.

Liegt die Rahmendichtung über eine weitere Dichtung, welche insbesondere das Formstück aufweist, gegen die Außenwand auf, so können Konstruktionsungenauigkeiten in der Außenwand als auch Längenunterschiede, die durch unterschiedliche Wärmedehnung bedingt sind, besonders einfach und auch über größere Strecken ausgeglichen werden.

Ist die Schiene mit dem/den Formstück(en) lösbar, insbesondere über Schrauben, verbunden, so können die Formstücke mit einer geringeren Präzision hergestellt und auch montiert werden, da die Lagefixierung über die Schienen erfolgen kann.

Weist der Rahmen ein endloses Profil auf, das der Öffnung in der Außenwand entspricht und welcher mit der Außenwand bündig abschließt, wobei zwischen Außenwand und Profil eine erhärtete gummielastische Dichtmasse angeordnet ist, so ist eine besonders formstabile Konstruktion gegeben, die gleichzeitig den unterschiedlichen Wärmedehnungen, beispielsweise des Rahmens und der Außenwand Rechnung trägt, wobei durch den bündigen Abschluß zwischen Außenwand und Rahmen ein besonders geringer Geräuschpegel erreicht werden kann.

Weist der Rahmen einen Schenkel auf, welcher in Richtung entlang der Außenwand erstreckend ausgebildet ist und an den von der Innenseite die Glasscheib(en) gedrückt ist/sind, so ist eine besonders einfach Lagefixierung der Glasscheiben ermöglicht.

Greifen die Druckelemente an einem, insbesondere weiteren, Schenkel des Rahmens an, welcher in Richtung entlang der Außenwand verläuft, so können Fertigungstoleranzen durch geringfügigere elastische Deformationen des Schenkels ausgeglichen werden.

Weist der Rahmen eine umlaufende Nut mit Hinterschneidung zur Aufnahme eines gummielastischen Profiles auf, welches die Glasscheibe(n) gegen den Schenkel gedrückt hält, so kann eine besonders einfache und rasche Montage der Glasscheiben im Rahmen, beispielsweise beim Austausch derselben, erfolgt. Das gummielastische Profil kann seinerseits eine Ausnehmung aufweisen, in welcher ein umlaufendes Spreizelement eindrückbar ist. Dieses Spreizelement kann auch beispielsweise über einen Notgriff aus der Nut herausgezogen werden, so daß die Glasscheiben dem Rahmen einfach entnommen werden können, womit ein leicht betätigbarer Notausstieg gewährleistet ist.

Der Rahmen kann auch eine Querstrebe aufweisen, an welcher ein Klappfenster angelenkt ist, wobei die Querstrebe einen weiteren Rahmen mit Dichtelementen aufweisen kann, der gegen den äußeren Rahmen analog der Glasscheiben gehalten ist. Dieser innere Teilrahmen kooperiert sodann über Schaniere und Dichtungen mit einem klappbaren Fensterteil, welcher ebenfalls gegebenenfalls in einem Rahmen angeordnet sein kann.

Liegt am Rahmen eine von einer Innenwandung ausgehende Verkleidung über eine gummielastische Dichtung an, so ist auch ein besonders einfacher und leicht anzupassender Abschluß des Fensters zur Innenwandung gegeben.

Im folgenden wird die Erfindung anhand der Zeichnungen näher erläutert.

Es zeigen:
Fig. 1 und Fig. 2 ein Fenster mit Rahmen im linken Teil von innen, im rechten Teil von außen gesehen,
Fig. 3 einen Schnitt entlang der Linie III-III von Fig. 1,
Fig. 4 einen Schnitt gemäß Linie IV-IV von Fig. 1 und
Fig. 5 einen Schnitt gemäß V-V von Fig. 2.

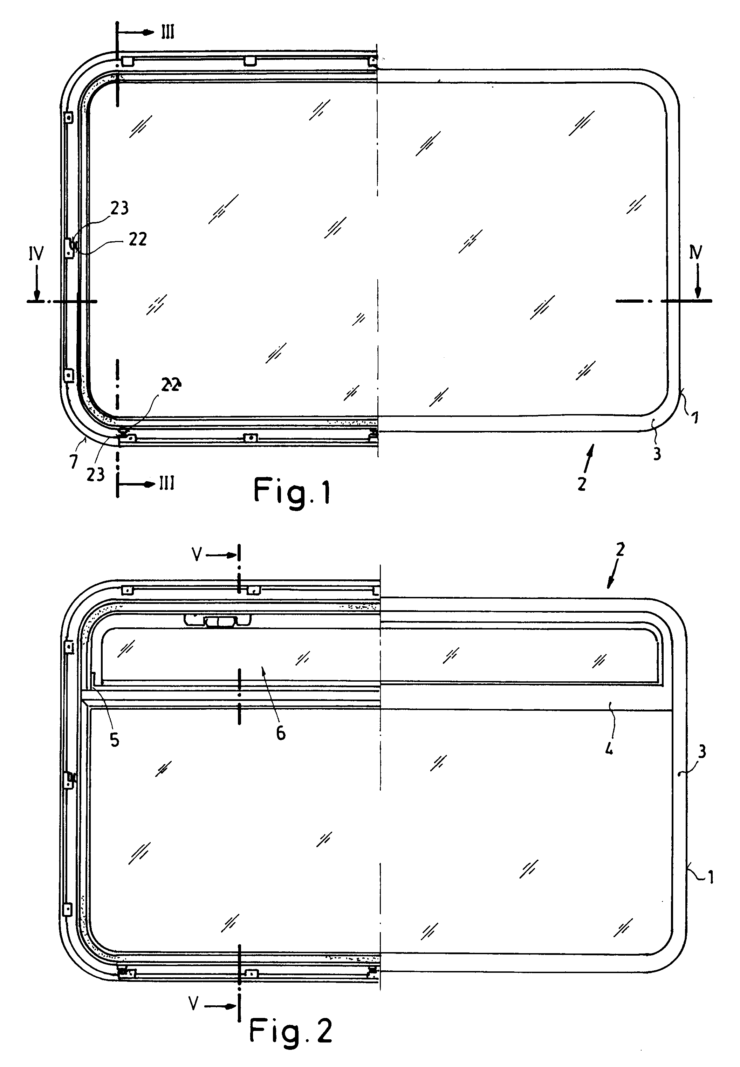

In den Fig. 1 und 2 sind Ansichten eines Fensters mit Rahmen von innen (linker Bildteil) und von außen (rechter Bildteil) in der Öffnung 1 einer Außenwand 2 eines Eisenbahnwaggons dargestellt. Der Rahmen 3 besteht aus einem Aluminiumprofil. Bei dem in Fig. 2 dargestellten Rahmen ist eine Querstrebe 4 vorgesehen, welche einen Innenrahmen 5 trägt, wobei ein Klappfenster 6 daran angelenkt ist.

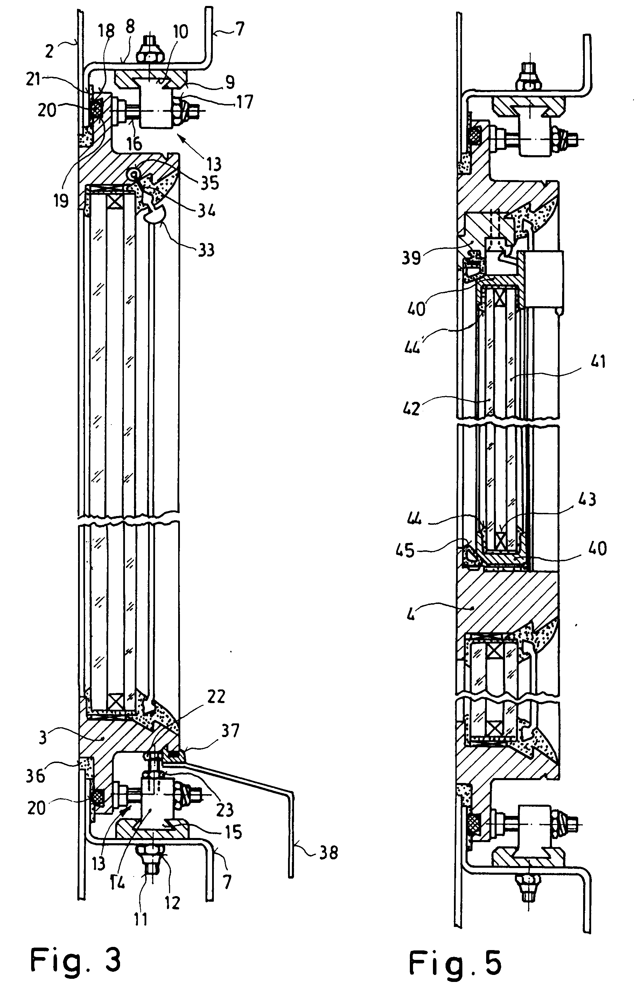

Wie besonders deutlich in Fig. 3 ersichtlich, ist mit der Außenwand 2 ein Formstück 7 durch Schweißung oder Klebung verbunden. Das Formstück ist im Querschnitt in etwa Z-förmig ausgebildet und weist einen Bereich 8 auf, welcher sich quer, u. zw. normal zur Längserstreckung der Außenwand 2 erstreckt. Dieses Formstück ist, wie besonders den Fig. 1 und 2 entnehmbar, um die Fensteröffnung umlaufend ausgebildet. Anstelle eines umlaufenden Formstückes können jedoch auch mehrere Formstücke vorgesehen sein. Eine andere Ausbildung des Formstückes kann derart sein, daß die Schenkel parallel zur Außenwand 2, u. zw. sowohl die, die an der Außenwand anliegen als auch die der Außenwand entfernten, unterbrochen sind. Im Bereich 8 sind in den geraden Erstreckungen der Formstücke Schienen 9 mit einer Nut 10 mit schwalbenschwanzförmiger Hinterschneidung vorgesehen. Die Befestigung der Schiene am Formstück erfolgt über Schrauben 11 mit Muttern 12. Das Druckelement 13 weist einen Körper 14 auf, der einen doppelkonischen Fuß 15 besitzt. Die Druckelemente 13 weisen Schrauben 16 mit Kontramutter 17 auf, die gegen einen Schenkel 18 des Rahmens 3 drücken. Dieser Schenkel 18 erstreckt sich parallel zur Außenwand 2 und weist eine umlaufende Nut 19 auf, in welcher eine O-Dichtung 20 angeordnet ist. Diese O-Dichtung 20 liegt über ein umlaufendes Dichtungsband 21 am umlaufenden Formstück 7 und damit dichtend an der Außenwand 2 an. Das Formstück kann weiters Schrauben 22 mit Kontramutter 23 aufweisen, mit welchen der Rahmen sowohl seitlich als auch nach oben und gegebenenfalls unten verschiebbar ist. Diese Druckelemente sind im unteren Bereich des Formelementes zweifach angeordnet und in den beiden Seitenbereichen des Rahmens jeweils einfach angeordnet, so daß eine exakte Positionierung des Rahmens in der Öffnung 1 besonders einfach möglich ist.

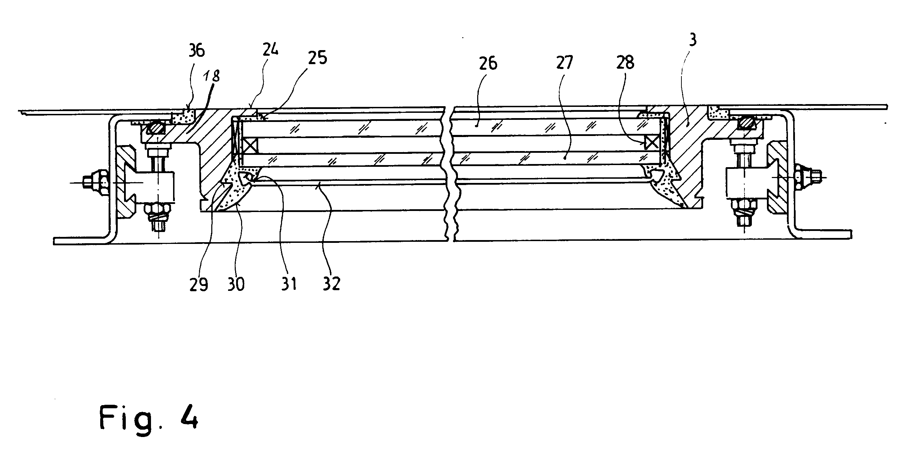

Wie in Fig. 4 besonders deutlich ersichtlich, weist der Rahmen 3 einen Schenkel 24 auf, an dem eine Gummidichtung 25 anliegt. Gegen diese Dichtung werden zwei Glasscheiben 26, 27, die über ein thermisch isolierendes Distanzstück 28 aneinander anliegen, angepreßt. Im Rahmen 3 ist weiters eine umlaufende Nut 29 mit Hinterschneidung vorgesehen, in welche ein gummielastisches Profil 30 eingreift, das feuerhemmend beschichtet ist, und welches die Scheiben 26, 27 gegen den Schenkel 24 des Rahmens 3 gedrückt hält. Das Profil 30 weist seinerseits eine umlaufende Ausnehmung 31 auf, in welcher ein Spreizelement 32 eingepreßt ist. Dieses Spreizelement 32 kann, wie in Fig. 3 ersichtlich, über eine Handhabe 33, welche als Notgriff dient, aus der Ausnehmung herausgezogen werden, wobei weiters über die Schnur 34 und Kugel 35 das Profil 30 zur Gänze aus der Nut 29 gezogen werden kann, so daß die Glasscheiben 26, 27 einfach aus dem Rahmen entfernbar sind.

Wie Fig. 4 entnehmbar, ist der Hohlraum zwischen Außenwand 2 und Rahmen 3 sowie Schenkel 18 ist durch eine dauerelastische erhärtbare Dichtmasse 36 abgedichtet. Der Rahmen, die Dichtmasse und die Außenwand schließen bündig zueinander ab.

Am Rahmen 3 kann, wie in Fig. 3 dargestellt, an der Innenseite eine gummielastische Dichtung 37 vorgesehen sein, an welcher eine Verkleidung 38 von der Innenwandung ausgeht, anliegt.

Bei dem in Fig. 5 dargestellten Schnitt ist die Querstrebe 4 mit einem Innenrahmen 39 integriert ausgebildet. Am Innenrahmen ist ein Rahmen 40 mit Glasscheiben 41, 42 angelenkt. Die Glasscheiben sind über ein Distanzstück 43 und Dichtung 44 festgehalten. Der Rahmen 40 liegt in Geschlossenstellung über eine Dichtung 45 gegen den Innenrahmen 39 an. Die Befestigung des Innenrahmens erfolgt in analoger Weise, wie die der Glasscheiben 26 und 27.

Bei der Montage des Rahmens wird so vorgegangen, daß am Formstück 7 die Schienen 9 über die Schrauben 11 und Muttern 12 fixiert werden. Nachdem das umlaufende Dichtband 21 an der Innenseite um die Öffnung herum am Formstück befestigt wurde, wird der Rahmen mit oder ohne Klappfenster in die Öffnung eingesetzt. Um eine besonders leichte Montage zu ermöglichen, soll der jeweilige Abstand zwischen den Schienen geringfügig größer sein, als die entsprechenden Abmessungen des Rahmens. Ist der Rahmen in der Öffnung angeordnet, werden die Druckelemente in die Schienen eingeführt. Hiebei werden in der unteren horizontalen Schiene zwei Druckelemente mit Höhenverstellung in den beiden seitlichen Schienen jeweils Druckelemente, wobei eines davon in Seitenrichtung verstellbar ist, und im oberen Bereich werden Druckelemente ohne Höhenverstellung vorgesehen. Durch geringfügiges Verstellen der Schrauben 16 wird der Rahmen gegen die Wandung leicht gedrückt, wonach eine Justierung des Rahmens sowohl seiten- als auch höhenmäßig über die Schrauben 22 erfolgt. Ist die exakte Positionierung erreicht, wird die Lage durch Festziehen der Kontramutter 23 erreicht. Anschließend werden die Druckelemente angezogen, so daß die Schenkel 18 über die Dichtungen 20 gegen die weitere Dichtung 21 und damit gegen die Außenwand 2 drücken. Um einen gleichmäßigen Druck des Rahmens gegen die Außenwand zu erreichen, kann das Anziehen der Schrauben auch mit einem Momentschlüssel erfolgen.

## Patentansprüche

1. Fenster in einer Öffnung (1) einer Außenwand (2) eines schienengeleiteten Fahrzeuges mit einem feststehenden Rahmen (3) aus formstabilem und zugfestem Material, z. B. Metall, faserverstärktem Kunststoff, in welchem zumindest eine, insbesondere zwei, Glasscheiben (26, 27) in Abstand zueinander über gummielastische Dichtungen (25) gelagert sind, wobei der Rahmen (3) bei der Öffnung (1) über zumindest eine gummielastische Dichtung (20) an der Innenseite der Außenwand (2) anliegt, dadurch gekennzeichnet, daß an der Innenseite der Außenwand (2), insbesondere umlaufend um die Öffnung (1), zumindest ein metallisches Formstück (7), welches einen quer, insbesondere normal, zur Außenwand (2) erstreckenden Bereich (8) aufweist, unlösbar mit der Außenwand verbunden ist, wobei das Formstück (7) quer, insbesondere normal, zur Außenwand (2) verstellbare Druckelemente (13) trägt, mit welchen der Rahmen (3) gegen die Außenwand (2) drückbar ist.

2. Fenster nach Anspruch 1, dadurch gekennzeichnet, daß Druckelemente (13) Stellelemente (22, 23) aufweisen, welche entlang, insbesondere parallel, zur Außenwand (2) in Richtung von oben nach unten und/oder quer, insbesondere normal, zu dieser Richtung verstellbar sind und an den Rahmen (3) angreifen.

3. Fenster nach Anspruch 1 oder 2, dadurch gekennzeichnet, daß die Druckelemente (13), zumindest teilweise, entlang der Formsstücke (7) um die Öffnung (1) verschiebbar, angeordnet sind.

4. Fenster nach Anspruch 1, 2 oder 3, dadurch gekennzeichnet, daß das/die Formstück(e) (7) eine Schiene (9) trägt, entlang welcher die Druckelemente (13) verschiebbar sind.

5. Fenster nach Anspruch 4, dadurch gekennzeichnet, daß die Schiene (9) eine entlang derselben verlaufende Ausnehmung (10) mit einer, insbesondere schwalbenschwanzförmigen, Hinterschneidung aufweist.

6. Fenster nach einem der Ansprüche 1 bis 5, dadurch gekennzeichnet, daß der Rahmen (3) eine zur Außenwand (2) offene umlaufende Nut (19) aufweist, in welche eine Rahmendichtung (20), insbesondere O-Dichtung, angeordnet ist.

7. Fenster nach Anspruch 6, dadurch gekennzeichnet, daß die Rahmendichtung (20) über eine weitere Dichtung (21), welche insbesondere das Formstück (7) aufweist, gegen die Außenwand (2) abgedichtet ist.

8. Fenster nach einem der Ansprüche 1 bis 7, dadurch gekennzeichnet, daß die Schienen mit dem/den Formstück(en) lösbar, insbesondere über Schrauben (11), verbunden ist/sind.

9. Fenster nach einem der Ansprüche 1 bis 8, dadurch gekennzeichnet, daß der Rahmen (3) ein endloses Profil aufweist, das der Öffnung (1) in der Außenwand (2) entspricht und daß dasselbe mit der Außenwand (2) bündig abschließt, wobei zwischen Außenwand (2) und Rahmen (3) eine erhärtete gummielastische Dichtmasse (36) angeordnet ist.

10. Fenster nach einem der Ansprüche 1 bis 9, dadurch gekennzeichnet, daß der Rahmen (3) einen Schenkel (24) aufweist, welcher in Richtung entlang der Außenwand (2) erstreckend ausgebildet ist und an den von der Innenseite die Glasscheiben (26, 27) gedrückt sind.

11. Fenster nach einem der Ansprüche 1 bis 10, dadurch gekennzeichnet, daß die Druckelemente (13) an einem, insbesondere weiteren, Schenkel (18) des Rahmens (3) angreifen, welcher in Richtung entlang der Außenwand (2) verläuft.

12. Fenster nach einem der Ansprüche 1 bis 11, dadurch gekennzeichnet, daß der Rahmen (3) eine umlaufende Nut (29) mit Hinterschneidung zur Aufnahme eines gummielastischen Profiles (30) aufweist, welches die Glasscheiben gegen den Schenkel (24) gedrückt hält.

13. Fenster nach einem der Ansprüche 1 bis 12, dadurch gekennzeichnet, daß der Rahmen (3) eine Querstrebe (4) aufweist, an welcher ein Klappfenster angelenkt ist.

14. Fenster nach einem der Ansprüche 1 bis 13, dadurch gekennzeichnet, daß am Rahmen (3) eine von der Innenwandung ausgehende Verkleidung (38) über eine gummielastische Dichtung (37) anliegt.
